# EUROPEAN PATENT SPECIFICATION

(11) **EP 1 644 934 B1**
(45) Date of publication and mention of the grant of the patent: **04.08.2010**
(21) Application number: 04744429.4
(22) Date of filing: 30.06.2004
(51) Int. Cl.: G11B 27/10, G11B 27/30, H04N 7/088, H04N 7/24, H04N 5/76

(54) **LINKING OF INTERACTIVE TELEVISION RECORDINGS TO APPLICATIONS**
VERBINDEN VON INTERAKTIVEN FERNSEHAUFZEICHNUNGEN MIT ANWENDUNGEN
ETABLISSEMENT D'UN LIEN ENTRE DES ENREGISTREMENTS DE TELEVISION INTERACTIVE ET DES APPLICATIONS

(30) Priority: 02.07.2003 EP 03101976
(43) Date of publication of application: 12.04.2006
(73) Proprietor: Koninklijke Philips Electronics N.V., 5621 BA Eindhoven (NL)
(72) Inventor: NEWTON, Philips, S., NL-5656 AA Eindhoven (NL); KELLY, Declan, P., NL-5656 AA Eindhoven (NL); VAN GESTEL, Wilhelmus, J., NL-5656 AA Eindhoven (NL)
(74) Representative: Steenbeek, Leonardus Johannes
(86) International application number: PCT/IB2004/051058
(87) International publication number: WO 2005/004157

(56) References cited:
- EP-A- 1 182 874
- EP-A- 1 286 349
- WO-A-01/82588
- US-A1- 2003 088 872
- US-A1- 2003 115 602
- JAMES P HUGHES ET AL: 'Architecture of the Secure File System' ISBN: 978-0-7695-9173-5 01 April 2001, EIGHTEENTH IEEE SYMPOSIUM ON, IEEE, PI, pages 277 - 277, XP031023315 & GULBINS, JÜRGEN: 'UNIX Eine Einführung in Begriffe und Kommandos von UNIX V.7' ISBN: 3-540-19248-4 1988, SPRINGER VERLAG, BERLIN, HEIDELBERG, NEW YORK, pages 46 - 47
- JAMES P HUGHES ET AL: "Architecture of the Secure File System" MASS STORAGE SYSTEMS AND TECHNOLOGIES, 2001. MSS '01. EIGHTEENTH IEEE SYMPOSIUM ON, IEEE, PI, 1 April 2001 (2001-04-01), pages 277-277, XP031023315 ISBN: 978-0-7695-9173-5
- Gulbins,Jürgen: "UNIX Eine Einführung in Begriffe und Kommandos von UNIX Version 7, bis System V.3" 1988, Springer Verlag , Berlin,Heidelberg,New York ISBN: 3-540-19248-4 , pages 46-47

## Description

This invention relates in general to the field of interactive television and more particularly to the recording and playback of television contents and even more particularly to handling of applications in the field of recording and playback of television contents.

Interactive television (iTV) is becoming more and more popular. An example of interactive television is the Multimedia Home Platform (MHP), which is a digital video broadcasting (DVB) standard intended to combine digital television (DTV) with interactivity and access to the Internet and the World Wide Web. MHP is a standard for iTV that specifies the functionality available to applications that are designed to operate on devices that support MHP. MHP is based on the Java platform, and it extends the Java platform with libraries specific to a digital iTV platform. MHP is typically designed for use on set-top boxes. The current version of the standard does not provide functionality for recording applications and audio/video content. MHP is based solely on live broadcast.

EP 1 182 874 A1 discloses a method of transmitting data, comprising transmitting conditional access information and content management information independently. Examples of content include audio/visual data, interactive data, computer programs, data associated with particular computer programs, and other types of data. The term "audio/visual data" as used in EP 1 182 874 A1 preferably connotes audio data, visual data, or a combination of the two, such as in a conventional television broadcast. The content is preferably transmitted independently of the content management information, and may alternatively or additionally be transmitted independently of the conditional access information. This can afford greater flexibility for the transmission of the different types of information. In EP 1 182 874 A1 an interactive application proposes menus and executes commands at the request of the end user and provides data related to the purpose of the application. Applications may be either resident applications, that is, stored in the ROM (or FLASH or other non-volatile memory) of the receiver/decoder, or broadcast and downloaded into the RAM, FLASH memory of the receiver/decoder.

EP 1 286 349 A1 relates to a method of facilitating the searching of a file, a method of searching a file, a table, a file comprising a representation of a bitstream and a table, a storage means, a hard disk video recorder, a receiver/decoder, and a broadcast system. EP 1 286 349 A1 finds particular, but not exclusive application to the location and retrieval of data from recorded bitstreams, particularly variable bitrate bitstreams, and particularly programmes recorded under the control of a receiver/decoder. EP 1 286 349 A1 finds particular, but not exclusive, application in providing functionality in a receiver/decoder for digital television. In EP 1 286 349 A1 an interactive application proposes menus and executes commands at the request of the end user and provides data related to the purpose of the application. Applications may be either resident applications, that is, stored in the ROM (or FLASH or other non-volatile memory) of the receiver/decoder, or broadcast and downloaded into the RAM, FLASH memory or hard disk of the receiver/decoder.

The book by Gulbins,Jürgen: "UNIX Eine Einführung in Begriffe und Kommandos von UNIX Version 7, bis System V.3" 1988, Springer Verlag, Berlin,Heidelberg,New York ISBN: 3-540-19248-4 , pages 46-47, describes the UNIX file system, in which access to a file is controlled in different ways for the author, for the group to which the author belongs and for other users. For example, other users may only have read access, while the author may also have write access.

In the upcoming new version of the MHP 2.0 Personal Digital Recorder (PDR) functionality will be integrated. Similar to today's video recorders for analogue television broadcasts using video tapes for recording broadcast streams, these digital video recorders for interactive television are either using fixed storage media, such as a harddisk, or removable media, such as optical discs, for storing recorded broadcasts. PDRs for interactive television record both A/V television contents and applications for playback at a later point in time. For MHP applications that will make use of this new functionality this means that they will be able to make recordings, obtain information on stored programmes and obtain background information on the content. MHP applications may also be recorded themselves and will have access to own data files.

DTV service providers offer a large variety of audio-visual (A/V) television programs and also of MHP applications allowing the interaction of the viewer/user with the TV set and its contents, wherein MHP applications can be divided into the two categories of service-bound and non-service bound applications.

Non-service bound applications are applications that provide interactivity on their own merit. They are not tied to content, they provide functionality to the user independent of the content. Examples of service-bound applications are: electronic program guides EPG's, gambling for instance related to a quiz show or a sports event, chat, e-mail, games, etc. For instance is an EPG an application used with e.g. digital set-top boxes to list current and scheduled programs that are or will be available on broadcast channels, which may be received by the set-top boxes. The EPG comprises e.g. a short summary or commentary for each program and is the electronic equivalent of a printed television program guide.

Service-bound applications are applications that are strongly related to the content, wherein content generally is the audio/video transmitted together with the application. This type of applications only has relevance if the associated content is available. Therefore, service-bound applications in general will be recorded together with the associated content. However, some service-bound applications may be related not to one but to several audio/video streams stored on e.g. a single storage medium. An example is an application that allows a user to select to view an episode of a series. For instance are several episodes of the series recorded at different points in time, e.g. daily or weekly. The entire number of episodes is recorded to the same storage medium. It is desired that the application offered the user the possibility to choose a certain episode of the stored episodes for viewing. Therefore it is a problem that the application is only recorded together with the associated content, i.e. a single broadcast episode broadcast and recorded concurrently with that application, and is not capable of recognising the remaining content. For instance other episodes on the same storage medium are not accessible from an identical or similar application other than the one recorded together with the specific episode. The application is only related to one single audio/video stream. Therefore there is a need for the application being able to see all related content, e.g. all recorded episodes, on a storage medium. Moreover it is a problem that recorded content may be deleted from a storage medium but not the associated application. This may result in an unstable system when an application is run without the associated content available on the storage medium.

Another problem is that it is time consuming to load an application into memory. This is the case because each time an audio/visual stream is run, the associated application is loaded into memory for running.

It is also desired that the application gives the viewer the option of playing the other episodes.

Thus, there is a need for a new way of recording iTV applications and content to storage media and/or playing back iTV recordings comprising applications and related content from the storage media.

The present invention overcomes the above-identified deficiencies in the art and solves at least the above identified problems. The invention is defined by the independent claims. The dependent claims define advantageous embodiments.

The general solution according to the invention is to tag recorded interactive television content with identification information for access control to the recorded iTV content. More specifically, recordings that are initiated by an application are tagged with the application that caused the recording and the broadcaster who broadcast the application. This allows an application to see which other programmes that are stored are related to the application and allows the user to navigate between those. It also allows the system to ensure that an application can only access the files that are linked to it so that one application cannot delete or modify the files from another application.

The present invention has the advantage over the prior art that it allows restricted access to recorded television content. Only the interactive television application, which recorded a television content may modify or delete the television content associated with the application.

A further advantage is that the present invention allows the selection between different parts of a multi-part program, such a television series.

Yet a further advantage of the present invention is that an application already in memory does not have to be re-loaded into memory when playing another part of a multi-part program, as it is already loaded into memory.

Further objects, features and advantages of the invention will become apparent from the following description of embodiments of the present invention, reference being made to the accompanying drawings, in which
Fig. 1 is a schematic diagram illustrating the principle of the invention,
Fig. 2 is a flow chart illustrating a method according to an embodiment of the invention, and
Fig. 3 is a schematic diagram showing a computer-readable medium according to another embodiment of the invention, and
Fig. 4 is schematic diagram showing an embodiment of the apparatus according to the invention.

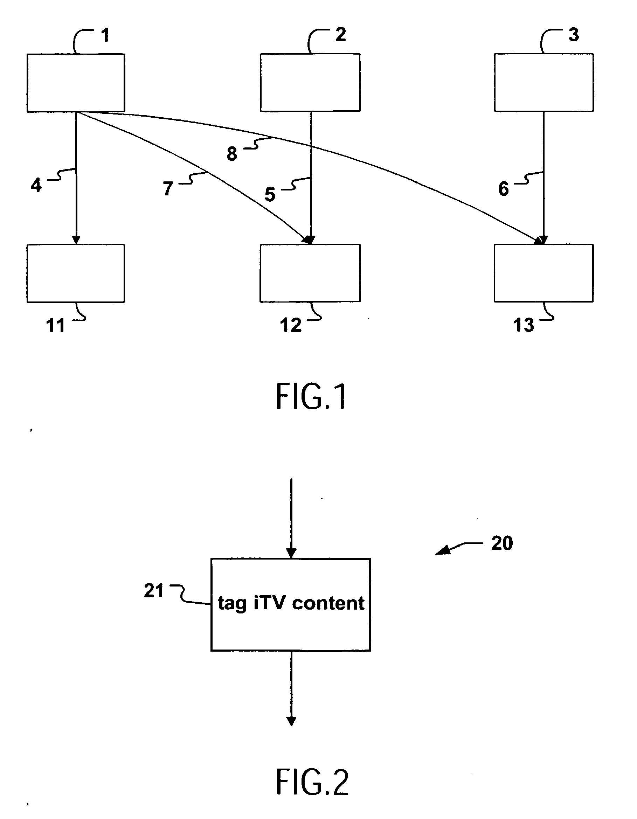

Fig. 1 is a schematic diagram illustrating the principle of the invention, wherein a first interactive television application 1 is related to an interactive television audio/visual stream 11, as indicated by arrow 4. The first interactive television application 1 is shown being related to two further interactive television applications 2, 3 and two further interactive television audio/video streams 12, 13, as indicated by the arrows 7, 8, wherein the further interactive television applications are related to the interactive television audio/video streams 12, 13 respectively, as indicated by the arrows 5,6. The interactive television applications 1, 2 and 3, recorded the associated interactive television streams 11, 12 and 13 at different times to a single storage medium. The interactive applications 1, 2 and 3 are also recorded to the storage medium. However, these applications are stored outside the transportstream (TS), i.e. separate from the A/V content 11, 12, 13. When the applications are broadcast as files, e.g. through a DSMCC carousel, the interactive application files are extracted from the transportstream during recording and stored separately. Preferably an additional file is generated, referred to as MHP info file, for example in XML format. The MHP info file describes how and where the interactive application files are stored on the storage medium and also the timing relationship between the interactive application and the A/V content. The MHP info file is always linked to the application. Additionally, an extra table is added to the MHP info file that lists the ID's of the related streams for this application. The table may for instance have the following structure:

```
                <RelatedStreams>
                        <ID>0</ID>
                        <tD>34</ID>
                </RelatedStreams>
```

In the example, illustrated in Fig. 1, the interactive television applications 1, 2 and 3 are very similar, they add the same interactivity to the content, which is located in the AV streams 11, 12 and 13. All three interactive television applications 1, 2 and 3 originate from the same broadcaster. The interactive television streams 11, 12 and 13 are tagged with information on the application 1, 2 or 3 respectively, which recorded them. The first application 1 knows about the other recorded streams as these are recorded on the same storage medium. Thus the first application I may give a user the option to also see the other streams 12, 13, which may are episodes of a series, as described above. The other interactive television applications 2, 3 do also have access to the remaining other interactive television streams 11, 13 and 12, 13 respectively. However, only the interactive television application having initiated the recording of an interactive television stream may modify the recorded stream in order to exclude undesired modifications or deletion of stored interactive television streams.

In the case of MHP, MHP applications have access to files through storage Application Programming Interfaces (API's). The streams are recorded as files. API's define the publicly accessible surface of software classes through which applications operate upon the specific functions contained within the MHP. When an application requests to see a list of files, the system will only return entries for the files that are tagged with the application. To tag a file with an application during recording, the system will built up a file table that links an appHcationID with a list of files that are related to the recorded application. These are for instance data files, images or recorded streams.

An embodiment of the invention is illustrated in Fig. 2, wherein a method 20 handling recording and/or playback of interactive television according to the above principle, comprises a step 21 of tagging recorded interactive television content with identification information for access control to the recorded interactive television content.

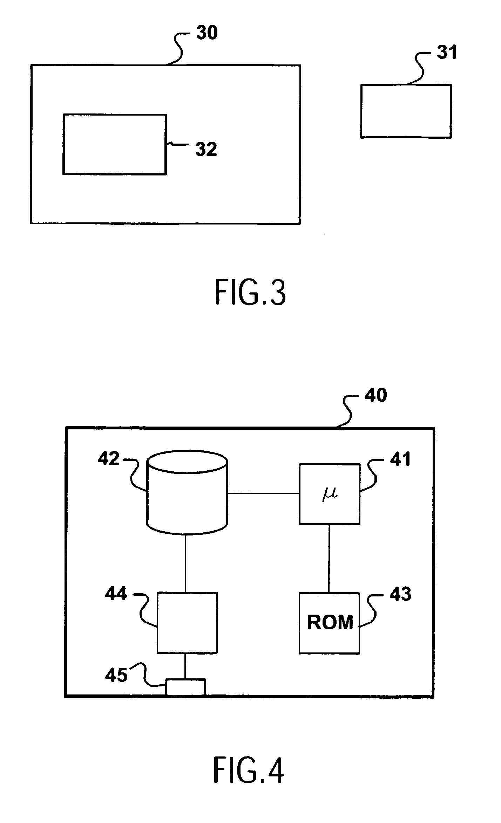

In another embodiment of the invention according to Fig. 3, a computer-readable medium 30 is provided having embodied thereon a computer program for processing by a computer 31. The computer program is performing above described method and comprises a code segment 32 for tagging of recorded interactive television content with identification information for access control to the recorded interactive television content.

Figure 4 shows an embodiment of the apparatus according to the invention, which is digital video recorder 40. The digital video recorder 40 comprises a central processing unit 41, a harddisk drive 42 as a memory, a ROM 43 (Read Only Memory), a video processing circuit 44 and an output 45.

In the ROM 43, the code element 32 (Figure 3) is stored, enabling the central processing unit 41 to be programmed to execute the method described above. With this method, interactive television stored in the harddisk drive 42 is tagged.

Interactive television content is retrieved from the harddisk drive 42 upon a user request and processed by the video processing circuit 44. The output signal of the video processing circuit 44 is send to the output 45, from which it can be sent bo a TV-set (not shown).

Applications and use of the above described tagging of recorded interactive television content according to the invention are various and include exemplary application such as personal digital video recorders, enhanced set-top boxes, etc.

The present invention has been described above with reference to specific embodiments. However, other embodiments than the preferred above are equally possible within the scope of the appended claims, e.g. different ways of storing the identification information along with the interactive television content than those described above, performing the above method by hardware or software, etc.

Furthermore, the term "comprises/comprising" when used in this specification does not exclude other elements or steps, the terms "a" and "an" do not exclude a plurality and a single processor or other units may fulfil the functions of several of the units or circuits recited in the claims.

## Claims

1. A method of recording and/or playback of recorded interactive television, the method comprising:
tagging of recorded television content with identification information for access control to the recorded television content,
**characterised by**
controlling access to said recorded television content in such a manner that said recorded television content may only be deleted or modified by an interactive television application that recorded said recorded television content, said identification information being information identifying said interactive television application that caused the recording.

2. The method according to claim 1, wherein said television content is audio/visual content associated to said interactive television application.

3. The method according to claim 2, comprising
causing recording of said recorded television content by said interactive television application.

4. The method according to claim 1, said identification information being information identifying a broadcaster who broadcast said interactive television application and said recorded television content for recording.

5. The method according to claim 2, further comprising indicating to a play-back application for playing back television content which other television content stored on a storage medium is related to said play-back application by means of said identification information.

6. The method according to claim 5, comprising said play-back application allowing a user to navigate between a plurality of said stored related television content.

7. The method according to any preceding claim, comprising storing said recorded television content, said interactive television application and said identification information in separate files.

8. The method according to claim 7, wherein said identification information is stored in an info file being linked to said interactive television application, comprising a table with related television content to said interactive television application on said storage medium.

9. The method according to claim 1, wherein said interactive television is MHP.

10. The method according to claim 1, said recorded television content being at least one audio/visual stream.

11. A computer-readable medium having embodied thereon a computer program for processing by a computer, the computer program, when used, being for performing the method according to the preceding claims.

12. Use of a Personal Digital Recorder with the computer program according to the preceding claim 11.

13. Use of recorded television content tagged with identification information for access control to the recorded television content, **characterised in that** said access control comprises controlling access to said recorded television content in such a manner that said recorded television content may only be deleted or modified by an interactive television application that recorded said recorded television content, said identification information being information identifying said interactive television application that caused the recording.

14. Apparatus for recording and/or playback of recorded interactive television, the apparatus comprising:
- a memory for storing television content; and
- a central processing unit for carrying out the method according to any of the preceding claims 1-10.

## Patentansprüche

1. Verfahren zur Aufzeichnung und/oder Wiedergabe aufgezeichneten interaktiven Fernsehens, wobei das Verfahren die nachfolgenden Verfahrensschritte umfasst:
Markierung aufgezeichneten Fernsehinhalts mit Identifikationsinformation zur Zugriffssteuerung auf den aufgezeichneten Fernsehinhalt,
**gekennzeichnet durch**
Steuerung von Zugriff auf den genannten aufgezeichneten Fernsehinhalt, und zwar derart, dass der genannte Fernsehinhalt nur **durch** eine interaktive Fernsehapplikation, die den genannten aufgezeichneten Fernsehinhalt aufgezeichnet hat, gelöscht oder geändert werden kann, wobei die genannte Identifikationsinformation Information ist, welche die genannte interaktive Applikation identifiziert, die für die Aufzeichnung gesorgt hat.

2. Verfahren nach Anspruch 1, wobei der genannte Fernsehinhalt mit der genannten interaktiven Fernsehapplikation assoziierter audiovisueller Inhalt ist.

3. Verfahren nach Anspruch 2, wobei dieses Verfahren den nachfolgenden Verfahrensschritt umfasst:
das Versorgen der Aufzeichnung des genannten aufgezeichneten Fernsehinhalts durch dien genannte interaktive Fernsehapplikation.

4. Verfahren nach Anspruch 1, wobei die genannte Identifikationsinformation Information ist, die einen Sender identifiziert, der die genannte interaktive Fernsehapplikation und den genannten aufgezeichneten Inhalt zur Aufzeichnung aussendet.

5. Verfahren nach Anspruch 2, wobei dieses Verfahren weiterhin der Wiedergabeanordnung angibt, Fernsehinhalt wiederzugeben, mit der anderer auf einem Speichermedium gespeicherter Fernsehinhalt zusammenhängt, und zwar mit Hilfe der genannten Identifikationsinformation.

6. Verfahren nach Anspruch 5, wobei dieses Verfahren die genannte Wiedergabeapplikation umfasst, die einem Bebnutzer die Möglichkeit bietet, zwischen einer Anzahl der genannten gespeicherten relatierten Inhalte zu navigieren.

7. Verfahren nach einem der vorstehenden Ansprüche, wobei das Verfahren Speicherung des genannten aufgezeichneten Fernsehinhalts, der genannten interaktiven Fernsehapplikation und der genannten Identifikationsinformation in einzelnen Dateien umfasst.

8. Verfahren nach Anspruch 7, wobei die genannte Identifikationsinformation in einer mit der genannten interaktiven Fernsehapplikation gekoppelten Infodatei, die eine Tabelle mit mit der genannten interaktiven Fernsehapplikation relatiertem Fernsehinhalt aufweist, auf dem genannten Speichermedium gespeichert wird.

9. Verfahren nach Anspruch 1, wobei das genannte interaktive Fernsehen MHP ist.

10. Verfahren nach Anspruch 1, wobei der genannte Fernsehinhalt wenigstens ein audiovisueller Datenstrom ist.

11. Mit dem Computer auslesbares Medium, in das ein Computerprogramm zur Verarbeitung durch einen Computer einverleibt ist, wobei das Computerprogramm im Gebrauch zur Durchführung des Verfahrens nach den vorstehenden Ansprüchen gemeint ist.

12. Verwendung eines persönlichen digitalen Recorders mit dem Computerprogramm nach dem vorstehenden Anspruch 11.

13. Verwendung aufgezeichneten Fernsehinhalts, markiert mit Identifikatio9nsinformation zur Steuerung von Zugriff auf den aufgezeichneten Fernsehinhalt, **dadurch gekennzeichnet, dass** die genannte Zugriffssteuerung Steuerung des Zugriffs auf denh genannten aufgezeichneten Fernsehinhalt umfasst, und zwar derart, dass der genannte aufgezeichnete Fernsehinhalt nur von einer interaktiven Fernsehapplikation, die den genannten aufgezeichneten Fernsehinhalt aufzeichnete gelöscht oder geändert werden kann, wobei die genannte Identifikationsinformation Information ist, die die genannte interaktive Fernsehapplikation identifiziert, welche die Aufzeichnung versorgte.

14. Gerät zum Aufzeichnen und/oder Wiedergeben aufgezeichneten interaktiven Fernsehens, wobei das Gerät Folgendes umfasst:
- einen Speicher zur Speicherung von Fernsehinhalt; und
- eine zentrale Verarbeitungseinheit zum Durchführen des Verfahrens nach einem der Ansprüche 1 bis 10.

## Revendications

1. Procédé d'enregistrement et/ou de reproduction de télévision interactive enregistrée, le procédé comprenant :
le marquage du contenu de télévision enregistré avec de l'information d'identification pour le contrôle d'accès au contenu de télévision enregistré,
**caractérisé par** :
le contrôle d'accès audit contenu de télévision enregistré de telle façon que ledit contenu de télévision enregistré puisse seulement être supprimé ou être modifié par une application de télévision interactive qui a enregistré ledit contenu de télévision enregistré, ladite information d'identification étant de l'information identifiant ladite application de télévision interactive qui a provoqué l'enregistrement.

2. Procédé selon la revendication 1, dans lequel ledit contenu de télévision est un contenu audio/visuel qui est associé à ladite application de télévision interactive.

3. Procédé selon la revendication 2, comprenant l'étape suivante consistant à :
provoquer l'enregistrement dudit contenu de télévision enregistré par ladite application de télévision interactive.

4. Procédé selon la revendication 1, ladite information d'identification étant de l'information identifiant un diffuseur qui diffuse ladite application de télévision interactive et ledit contenu de télévision enregistré pour l'enregistrement.

5. Procédé selon la revendication 2, comprenant encore l'étape suivante consistant à indiquer à une application de reproduction pour reproduire le contenu de télévision quel autre contenu de télévision qui est stocké sur un support de mémoire est lié à ladite application de reproduction au moyen de ladite information d'identification.

6. Procédé selon la revendication 5, comprenant ladite application de reproduction qui permet à un utilisateur de naviguer entre une pluralité desdits contenus de télévision apparentés stockés.

7. Procédé selon l'une quelconque des revendications précédentes 1 à 6, comprenant l'étape suivante consistant à stocker ledit contenu de télévision enregistré, ladite application de télévision interactive et ladite information d'identification dans des fichiers séparés.

8. Procédé selon la revendication 7, dans lequel ladite information d'identification est stockée dans un fichier d'information qui est lié à ladite application de télévision interactive, comprenant une table avec un contenu de télévision apparenté à ladite application de télévision interactive sur ledit support de mémoire.

9. Procédé selon la revendication 1, dans lequel ladite télévision interactive est la norme MHP.

10. Procédé selon la revendication 1, ledit contenu de télévision enregistré étant au moins un flux audio/visuel.

11. Support lisible par ordinateur ayant réalisé sur celui-ci un programme informatique pour être traité par un ordinateur, le programme informatique, lorsqu'il est utilisé, étant destiné à mettre en oeuvre le procédé selon l'une quelconque des revendications précédentes 1 à 10.

12. Utilisation d'un enregistreur numérique personnel avec le programme informatique selon la revendication précédente 11.

13. Utilisation d'un contenu de télévision enregistré qui est marqué avec de l'information d'identification pour le contrôle d'accès au contenu de télévision enregistré, **caractérisée en ce que** ledit contrôle d'accès comprend l'étape suivante consistant à contrôler l'accès audit contenu de télévision enregistré de telle façon que ledit contenu de télévision enregistré puisse seulement être supprimé ou être modifié par une application de télévision interactive qui a enregistré ledit contenu de télévision enregistré, ladite information d'identification étant de l'information identifiant ladite application de télévision interactive qui a provoqué l'enregistrement.

14. Appareil pour l'enregistrement et/ou la reproduction de télévision interactive enregistrée, l'appareil comprenant :
- une mémoire pour stocker le contenu de télévision ; et
- une unité de traitement centrale pour mettre en oeuvre le procédé selon l'une quelconque des revendications précédentes 1 à 10.
